# EUROPEAN PATENT SPECIFICATION

(11) **EP 3 690 291 B1**
(45) Date of publication and mention of the grant of the patent: **13.11.2024**
(21) Application number: 20154600.9
(22) Date of filing: 30.01.2020
(51) Int. Cl.: F16K 5/06, F16K 15/18

(54) **BALL VALVE WITH NON-RETURN VALVE ASSEMBLY INCORPORATED IN THE BALL**
KUGELVENTIL MIT EINGEBAUTEM RÜCKSCHLAGVENTIL
SOUPAPE A BILLE AVEC SOUPAPE DE RETENUE INCORPOREE

(30) Priority: 30.01.2019 IT 201900001379
(43) Date of publication of application: 05.08.2020
(73) Proprietor: Greiner S.p.A., 25065 Lumezzane (BS) (IT)
(72) Inventor: LENA, Roberto, 25065 Lumezzane (BS) (IT); ASTORI, Giorgio Mario, 25065 Lumezzane (BS) (IT)
(74) Representative: Marietti, Andrea

(56) References cited:
- EP-A1- 3 351 835
- DE-A1- 3 835 144
- GB-A- 2 157 809
- US-A- 3 695 449

## Description

### Field of the invention

The present invention concerns the field of ball valves, in particular ball valves with a non-return valve assembly, or restraining assembly, incorporated in the ball.

### Prior art

Ball valves with an incorporated restraining assembly, i.e. ball valves having a non-return valve therein, are known in the art.

GB 2157809, in the name of Caleffi, describes an example of a ball valve with a non-return valve incorporated inside the ball itself and adapted to prevent an accidental backflow of water towards the distribution network. A similar solution does not allow to carry out some types of control. EP3351835 discloses an alternative solution with an intake hole. US3695449 discloses a valve with a bypass channel.

Moreover, it is known to provide the valves with intakes and discharges, for example to carry out checks or interventions on the valve or system in which the valve is mounted. Valves wherein the pressure intakes/discharges are arranged downstream of the ball, considering the direction allowed to the fluid by the non-return valve of the ball, are known. It should be noted that a same hole can alternately be used as pressure intake or discharge depending on the use, even though a pressure intake must observe certain technical characteristics, such as for example a shape that minimizes any pressure losses, which are not mandatory for a discharge. Valves equipped with pressure intakes and discharges arranged upstream of the ball are also known. It is however complex and costly to make and produce valves provided with pressure intakes and discharges arranged both upstream and downstream of the ball.

It should here be observed that the expression "pressure intake" substantially refers to a hole or a perforated branch that, when made in a passage component of a fluid distribution system, including a valve or tap, has the purpose of allowing a tool for measuring the fluidic pressure at that point to be connected thereto and is thus shaped to allow to the punctual detection of the pressure within the system, in the aforesaid passage component, without introducing possible significant variations in the pressure of the fluid itself.

Such pressure intake, when it does not assume the simple form of a hole on a pipe wall or on the wall of a fitting for the passage of a fluid, can assume the form of a short duct that branches off from a portion of a duct, or from a fitting, of the fluid and which has an end section for the outflow of the fluid, which is shaped for the coupling to a tool for detecting the pressure and/or for preventing possible alterations to the pressure to be measured (such as for example pressure losses).

It should also be noted that the words "pressure intake hole" will mean, here and below, such a hole, or a branch duct with such a hole, that allows the coupling to a tool for measuring the pressure of the fluid.

As per the expression "discharge" or "discharge hole," it will mean, here and below, a hole or perforated branch duct of a passage component of a fluid distribution system, including a valve or a tap that, when normally closed, simply allows to discharge the fluid generally present upstream of that hole or perforated duct outside of the system. Unlike the pressure intake hole, such discharge hole does not necessarily require structural precautions to prevent fluid pressure alterations and does not necessary have to be shaped such as to allow the coupling to an external measuring tool.

Object of the present invention is to provide a ball valve with a restraining assembly therein, i.e. with a non-return valve inside the ball, and which solves the problems of the known art, in particular allowing a greater number of checks and interventions, while keeping unvaried the compactness and production simplicity of the valve itself.

### Summary of the invention

These and other objects are achieved by the present invention by providing a ball valve according to one or more of the accompanying claims.

In particular, object of the present invention is a valve according to the accompanying claim 1. Preferred aspects of the invention are also listed in the respective dependent claims.

In particular, according to an aspect of the present invention, a ball valve for direct insertion in ducts of a hydraulic system comprises a valve body having a seat in which are housed: a ball, rotatable, around a rotation axis, alternately between an opening position and a closing position of the valve body and hollow so that to define a fluidic passage; a non-return valve assembly inserted in at least one portion of said fluidic passage of said ball. The valve body comprises at least two connection fittings configured to be connected to relevant ducts of the hydraulic system. The valve body comprises at least one pressure intake hole arranged upstream of the ball, and at least one discharge hole fluidically connected with said seat, which is fluidically connected with the duct downstream of the ball, both in an opening position and in a closing position of the ball. At least part of the discharge hole is arranged upstream of the rotation axis of the ball, and its axis is arranged upstream of the rotation axis of the ball.

As mentioned, "pressure intake" holes and a "discharge" hole are defined. Such definition is used to better distinguish the two elements. It is however possible that the discharge hole has the same shape as that of the pressure holes and that, in addition to being used to allow to discharge the flow of the valve (i.e. from the ducts connected thereto), it can be used to allow, in different conditions of use, to connect a device for detecting the pressure of the flow inside the valve.

Naturally, the contrary is not always true. In other words, a discharge hole may not necessarily be shaped to be able to carry out the "pressure intake" function.

Moreover, it should be noted that the definitions "upstream" and "downstream" refer to the direction of the fluid through the non-return assembly. As known, the non-return assembly, in a normal condition of use, allows the direction of the fluid in one direction only, thus, the definitions "upstream" and "downstream" are not ambiguous.

Thanks to the present solution, it is possible to provide a compact and economic valve that allows to monitor and/or discharge the flow both upstream of the ball and downstream of the ball. In particular, the discharge hole is arranged in proximity of the pressure intake, although being fluidically connected with the duct downstream thereof. In other words, although the position of the discharge hole, as seen from the outside, seems to be upstream of the ball, it is in fact always fluidically connected to the portion downstream thereof, also when the ball is in a closing position.

According to a particular aspect, the discharge hole is directly connected to said seat. In other words, an end of the discharge hole is arranged on a wall of the seat of the ball.

According to an aspect, the discharge hole is completely arranged upstream of the rotation axis of the ball.

According to an aspect, in a closing position of the ball, one or more gaskets prevent the fluidic connection between the discharge hole and the connection fitting arranged upstream of the ball.

According to an aspect, at least part of the fluidic passage at least partially containing the non-return valve assembly has an inner diameter of greater dimensions than the inner diameter of the ducts of the hydraulic system to which the fittings are configured to be directly connected.

According to an aspect, the discharge hole has an axis parallel to the rotation axis of said ball.

According to an aspect, the ball has an activation knob, and the discharge hole is arranged in a way opposite the activation knob, with respect to said valve body.

According to an aspect, the axis of said pressure intake hole is arranged orthogonally to the axes of said discharge hole.

According to an aspect, the valve comprises a second pressure intake hole. Typically, such second hole is opposite the first pressure intake hole.

### Brief description of the figures

Further characteristics and advantages of the present invention will become clearer in the following description, made by way of example and without limitations, with reference to the accompanying drawings, in which:
- Figure 1 is a sectional view of a ball valve according to the present invention, in an opening condition;

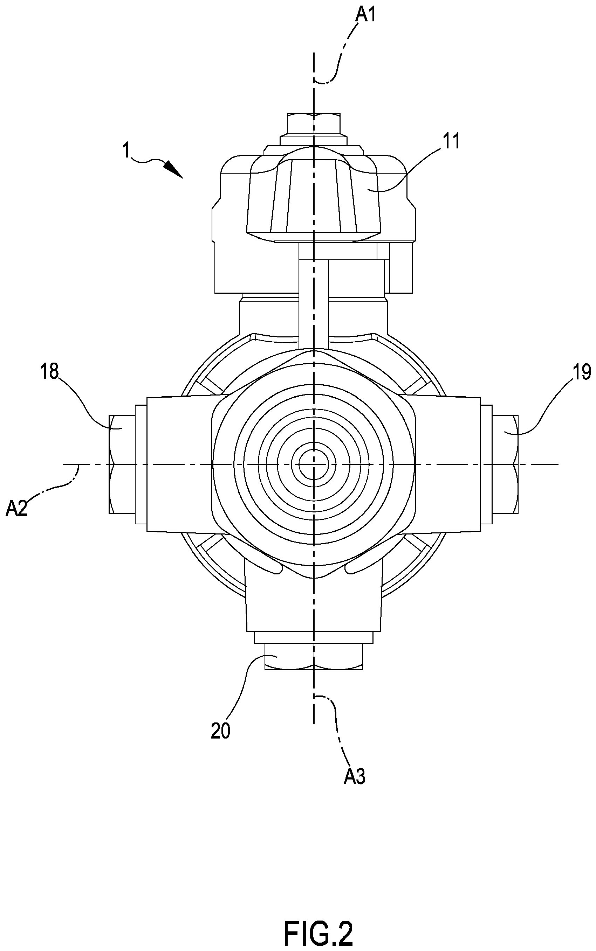

- Figure 2 is side view of the valve shown in figure 1;
- Figure 3 is a sectional and plan view of the valve of figure 1, in a closing position;
- Figure 4 is a schematic sectional view of the valve of figure 1, wherein the path of the fluid inside the valve itself is shown.

### Detailed description of the figures

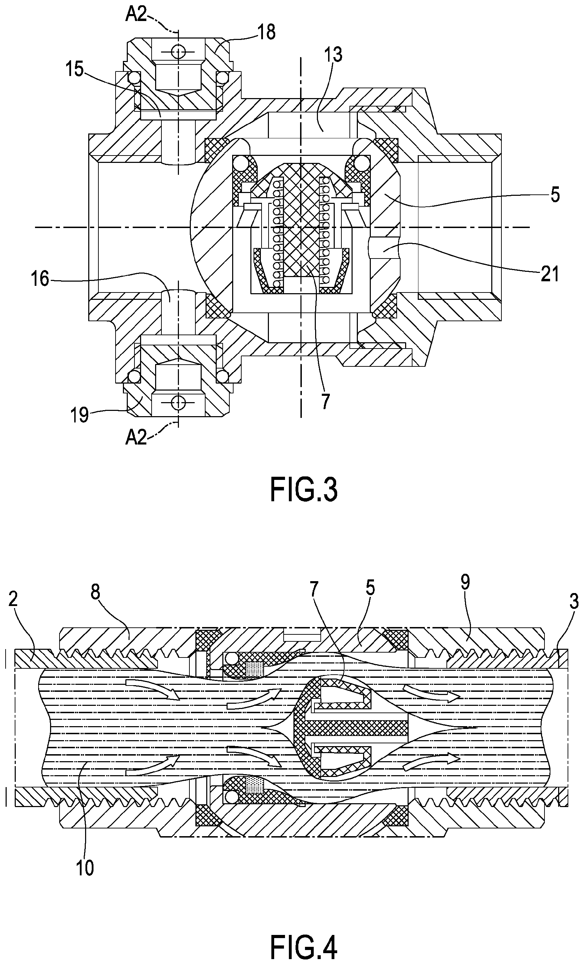

With reference to the figures, a ball valve 1, hereinafter valve 1, for direct insertion in ducts 2, 3 (shown in figure 4) of a hydraulic system, comprises a valve body 4 into which are housed a hollow ball 5, so that to make a passage 6 for the fluid 10 (shown in figure 4), and a non-return valve assembly 7 inserted in at least one portion of the passage 6 of the ball 5. The valve body 4 comprises at least two connection fittings 8, 9 shaped to be connected to respective ducts 2, 3 of a respective hydraulic system. The valve body 4 of the valve 1 is further provided with the mentioned connection fittings 8, 9 (hereinafter also "fittings 8, 9"), which allow the insertion of the valve 1 in a hydraulic system, i.e. the direct coupling of the valve 1 to the inlet 2 and outflow 3 ducts. In particular, the valve 1 has a first fitting 8 upstream of the ball 5, and a second fitting 9 downstream of the ball.

The fittings 8, 9 typically have a sleeve portion configured to accommodate therein, and to be directly coupled to, the ducts 2, 3 of the hydraulic system, i.e. without interposing other parts other than known sealing elements such as hemp, anaerobic sealants, or still others known in the art.

For example, the fittings 8, 9 can be threaded so that to allow to screw the respective ducts 2, 3 to the fittings 8, 9.

The configuration shown is only an example of the possible embodiments of the direct coupling between the fittings 8, 9 and the ducts 2, 3. Any embodiment that allows a direct coupling between the fittings 8, 9 and the respective ducts 3, 2 falls within the protection scope of the present invention.

The fittings 8, 9 are obviously in fluidic continuity with the passage 6 of the ball 5, so that to allow the fluid 10 to flow within the valve 1 itself.

The ball valve 1 is able to open/close the passage of fluid 10 from an inlet duct 2 towards an outflow duct 3 in a known way, typically by operating a respective knob 11.

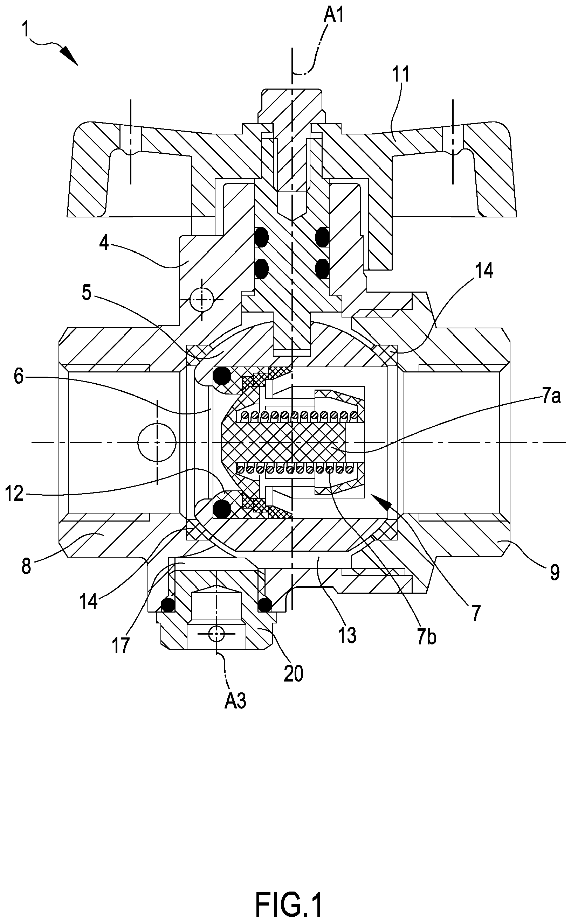

In particular, the ball 5 is rotatable around an axis A1, so that, in an opening position, the passage 6 is aligned with the fittings 8, 9, so that to allow the passage of fluid 10 through the valve 1, as shown in figure 1.

By rotating the ball 5 around the axis A1, it is possible to bring the ball 5 in a closing position, as shown in figure 3, wherein a fluid 10 cannot pass through the valve, i.e. the fluidic connection between the two fittings 8, 9 mentioned is prevented.

The ball 5 is thus movable inside a respective seat 13 obtained inside the valve body. The seat 13 is typically provided with gaskets 14 adapted to ensure the fluidic tightness when the ball 5 is in a closing position. The gaskets 14 are preferably adapted to ensure the fluidic tightness also preferably between the pressure holes 15, 16 arranged upstream of the ball 5 (further specified below) and the connection fitting (9) arranged downstream of the ball.

As mentioned, the ball 5 is hollow, so that to define a passage 6, in which a non-return valve assembly 7, known and not object of the present invention, is inserted. Typically, the non-return valve assembly 7 is provided with a plug 7a axially movable inside the hole 6. A countering spring 7b pushes the plug 7a against a respective housing 12 arranged inside the passage 6. A gasket (not shown in detail in the figures) is typically interposed between the housing 12 and the plug 7a, so that to ensure the tightness. When the fluid flows in the proper direction, i.e. from the inlet duct 2 towards the outflow duct 3 (i.e. from the first fitting 8 towards the second fitting 9), the pressure of the fluid 10 counters and overcomes the action of the countering spring, thus allowing the decoupling of the plug 7a from the respective seat 12. This way, the fluid 10 is allowed to pass through the valve 1, as shown in figure 4. Instead, when the fluid 10 exerts a pressure against the plug 7a in the wrong direction, i.e. when a backflow of the fluid 10 from the outflow duct 3 towards the inlet duct 2 happens, such plug 7a is pushed against the respective seat 12. This way, the coupling between the two elements 7a, 12 is favored by the simultaneous action of the fluid 10 and of the countering spring. The backflow of the fluid 10 is thus prevented.

Preferably, the inner diameter of the passage portion 6 housing the non-return valve assembly 7 has greater dimension than the dimension of the inner diameter of the ducts 2, 3 of the hydraulic system.

Thanks to this, as shown in figure 4, the fluid 10 is not subjected to excessive deviations and/or narrowings during its path inside the valve 1, thus the concentrated pressure losses are minimized. Thus, thanks to the present invention, the valve 1 is able to meet the maximum request of fluid 10 and to thus allow the passage of the maximum flow rate available in the system.

The valve body 4 has at least one pressure intake hole 15 (hereinafter also "pressure hole") arranged upstream of the ball 5. In particular, the pressure hole 15 (shown in figure 3) ends within the first fitting 8 arranged upstream of the ball 5. In a known way, the pressure hole typically has a smaller diameter with respect to the first fitting 8 and is configured so that to allow the connection with a respective device for measuring the pressure and/or flow rate of the fluid inside the valve body 4, known in the art and not discussed in detail herein.

A cap 18 is typically combined with the pressure hole 15 so that to prevent fluid from coming out of the valve body through the hole 15 during a normal condition of use.

The pressure hole 15 can have portions with different diameters from one another. For example, with reference to the figures, the portion of the pressure hole 15, which is connected to the first fitting 8, has a smaller diameter with respect to the pressure hole portion to which the cap 18 connects.

Typically, although not necessarily, a second pressure hole 16 is arranged upstream of the ball 5. The shape of the second pressure hole 16 is typically identical to that of the first pressure hole 15. A respective cap 19 closes the second pressure hole 16 in a normal condition of use. Preferably, the second pressure hole 16 is arranged opposite the first pressure hole 15.

It should be noted that the pressure (intake) hole 15 and the possible pressure (intake) hole 16 are holes substantially shaped for the coupling to a tool for measuring the fluid pressure and for allowing an accurate detection, or at least not distorted, of the fluid pressure inside the respective fitting of the ball valve 1.

Such pressure holes 15, 16 are thus preferably shaped so that to minimize possible pressure losses, have sections such as to not perturb the measuring of the fluid pressure and preferably have coupling means, or a shape adapted for coupling to a tool for measuring the pressure.

In a particular embodiment, the pressure holes 15, 16 have the same axis A2.

The axis A2 of the first and/or second pressure hole 15, 16 is typically orthogonal with respect to the rotation axis A1 of the ball 5, even though, in different embodiments, it is possible to arrange the pressure holes 15, 16 differently with respect to what is shown.

According to the invention, the valve body 4 comprises at least one discharge hole 17 fluidically connected with the seat 13 of the ball 5. Typically, the discharge hole 17 is directly connected to the seat 13, i.e. ends on a wall of the seat 13 itself.

The valve 1 is configured so that the seat 13 of the ball 5 is fluidically connected with the duct downstream of the ball 5, both in an opening position and in a closing position of said ball 5.

Such condition can be achieved in different ways. Typically, the ball has an opening 21 (shown in figure 3) connected to the fluidic passage 6, typically orthogonal thereto, so that to connect the fluidic passage 6 to the outer surface of the ball 5. Therefore, in an opening position, the opening 21 connects the fluidic passage 6 with the seat 13. In other words, while (the greatest) part of the fluid 10 passes through the passage 6, (a small) part of the fluid 10 entering the passage 6 from the first fitting 8 goes beyond the non-return valve assembly 7, passes through the opening 21 and fills the seat 13, and thus the discharge hole 17. In this case (i.e. with the valve 1 open and the fluid 10 that in part reaches the seat 13 through the hole 21), the stagnation of fluid 10 between the inner surface of the seat 13 and the ball 5 is avoided, thus consequently avoiding also the depositing of bacteria that could cause, for example, the legionellosis phenomenon.

A cap 20 is typically connected to the discharge hole 17 so that, in a normal condition of use, the fluid 10 does not come out of the discharge hole 17.

If the cap 20 is removed, part of the fluid 10 goes through the passage 6 and part of the fluid 10 comes out of the valve 1 through the discharge hole 17. If the flow direction of the fluid 10 is reversed, i.e. if the fluid flows from the second fitting 9 towards the first fitting 8, the non-return valve assembly 7 closes. This way (also thanks to the presence of said gaskets 14), the fluid 10 is prevented from coming out of the first fitting 8. All the fluid 10 is thus deviated towards the opening 21. If the cap 20 is removed, the fluid 10 is discharged from the discharge hole 17. If the cap 20 is present on the discharge hole 17, the flow of the fluid is interrupted.

According to the invention, at least part of the discharge hole 17 is arranged upstream of the rotation axis A1 of the ball. Such definition is clear for the technician of the sector.

For example, when considering the flow direction of the fluid 10 in the valve 1, or at least in the valve portion upstream of the ball, and when considering a plane containing the rotation axis A1 of the ball 5 and perpendicular to the flow direction mentioned, at least part of the discharge hole 17 is in the portion of space upstream of such plane (considering the flow direction mentioned). Alternatively, considering a plane containing the rotation axis A1 and the flow direction of the fluid 10, and arranging the axis A1 vertically, and the flow direction of the fluid 10 as a straight line orthogonal to the axis A1, in a direction from left to right (i.e. as shown in the view of figure 1), at least part of the discharge hole 17 (i.e. of the orthogonal projection of the hole 17 on the plane considered) is arranged at the left of the rotation axis A1 of the ball A1.

Typically, at least half of the discharge hole 17 is upstream of the rotation axis A1 of the ball. According to the invention, the axis A3 of the discharge hole 17 is arranged upstream of the rotation axis A1 of the ball.

In the preferred embodiment shown in the figures, the entire discharge hole 17 is arranged upstream of the rotation axis A1 of the ball 5.

According to a preferred aspect, the discharge hole 17 is arranged in a way opposite (with respect to the valve body 4) the activation knob 11 of the ball 5. Thus, in general, the axis A3 of the discharge hole 17 is orthogonal to the axis A2 of the pressure intake hole 15. In different possible embodiments, it is however possible to provide a different orientation for the discharge hole 17 and/or for the pressure intake holes 15, 16.

The operation of the valve 1 is clear from the present description and from the figures and is briefly set forth here.

The valve 1 is inserted in a hydraulic system, and in particular an inlet 2 and an outflow 3 ducts of said hydraulic system are coupled to respective fittings 8, 9 of the valve 1.

When the valve 1 is opened, by operating the knob 11, the pressure of the fluid 10 counters the action of the countering spring and opens the non-return valve assembly 7, thus the fluid 10 passes through the hole 6 and goes inside the outflow duct 3.

If the direction of the fluid is reversed, or anyhow stopped, the non-return valve assembly 7 closes. The discharge hole 17 allows to access the fluidic portion downstream of the ball 5.

When the valve is open, it is possible, for example, to check the proper operation of the non-return valve assembly 7. In this case, thanks to the use of tools and techniques known to the skilled person of the sector, the system portion arranged downstream of the ball 5 is filled with fluid 10 through the discharge hole 17, and it is possible to check that there are no fluid leaks from the non-return valve assembly 7 towards the system portion arranged upstream of the ball 5 via at least one of, or both, the pressure holes 15, 16.

By operating the knob 11 again to close the valve, the flow of the fluid 10, thanks to the rotation of the ball in a known way, is interrupted and the plug 7a, pushed by the countering spring, returns in its own resting condition, as shown in figure 3, against the respective seat 12.

When the valve is closed, it is e.g. possible to discharge both the fluid 10 present downstream of the ball 5 and the fluid 10 present between the seat 13 and the outer surface of the ball 5 through the discharge hole 17. This allows, for example during cold periods, to prevent the formation of ice which could compromise the integrity of the system in which the valve 1 is mounted.

In addition to this, thanks to the discharge hole 17, it is possible to detect the pressure present downstream of the ball by means of appropriate tools and methods known to the skilled person of the sector.

It should be remarked that only a two-way valve has been described until now, but the present invention can also be applied to valves with three or more ways, by means of embodiments not shown in the figures.

## Claims

1. Ball valve (1) for direct insertion in ducts (2, 3) of a hydraulic system, comprising a valve body (4) having a seat (13) in which are housed:
• a ball (5) rotatable around a rotation axis (A1), alternatively between an opening position and a closing position of the valve body (4), and hollow so that to define a fluidic passage (6);
• a non-return valve assembly (7) inserted in at least one portion of said fluidic passage (6) of said ball (5);
said valve body (4) comprising at least two connection fittings (8, 9) configured to be connected to respective ducts (2, 3) of said hydraulic system,
wherein said valve body (4) comprises at least one pressure intake hole (15, 16) arranged upstream of the ball (5), and at least one discharge hole (17) fluidically connected with said seat (13),
wherein said seat (13) is fluidically connected with the fitting (9) downstream of said ball, both in an opening position and in a closing position of said ball (5),
and wherein at least part of the discharge hole (17) is arranged upstream of the rotation axis (A1) of said ball (5), **characterized in that** the axis (A3) of the discharge hole (17) is arranged upstream of the rotation axis (A1) of the ball (5).

2. Valve (1) according to claim 1, wherein said discharge hole (17) is directly connected with said seat (13).

3. Valve (1) according to claim 1 or 2, wherein the discharge hole (17) is entirely arranged upstream of the rotation axis (A1) of said ball.

4. Valve (13) according to claim 1, 2 or 3, wherein, in a closing position of the ball (5), one or more gaskets (14) prevent the fluidic connection between the discharge hole (17) and the connection fitting (8) arranged upstream of the ball (5), and preferably between the pressure holes (15, 16) and the connection fitting (9) arranged downstream from the ball.

5. Valve (1) according to one of the preceding claims, wherein at least part of said fluidic passage (6) at least partially containing said non-return valve assembly (7) has an inner diameter of greater dimensions than the inner diameter of said ducts (2, 3) of said hydraulic system, to which said at least two fittings (8, 9) are configured to be directly connected.

6. Valve (1) according to one of the preceding claims, wherein the discharge hole (17) has an axis (A3) parallel to the rotation axis of said ball (5).

7. Valve according to claim 6, wherein said ball (5) has an operating knob (11), and said discharge hole (17) is arranged in a way opposite the operating knob (11), with respect to said valve body.

8. Valve (1) according to one of the preceding claims, wherein the axis (A2) of said pressure intake hole is arranged orthogonally to the axis (A3) of said discharge hole (17).

9. Valve (1) according to one of the preceding claims, comprising a second pressure intake hole (16), wherein preferably said second pressure intake hole (16) is arranged opposite the first pressure intake hole (15).

10. Valve (1) according to one of the preceding claims, wherein said ball (5) has an opening (21) fluidically connected to the fluidic passage (6), so that to connect the fluidic passage (6) with the outer surface of the ball (5).

## Patentansprüche

1. Kugelhahn (1) zum direkten Einsetzen in Leitungen (2, 3) eines Hydrauliksystems, aufweisend einen Ventilkörper (4) mit einem Sitz (13), in dem untergebracht sind:
• eine Kugel (5), die um eine Rotationsachse (A1) alternativ zwischen einer Öffnungsposition und einer Schließposition des Ventilkörpers (4) drehbar ist und hohl ist, um einen Fluiddurchgang (6) zu definieren;
• eine Rückschlagventilanordnung (7), die in mindestens einen Abschnitt des Fluiddurchgangs (6) der Kugel (5) eingesetzt ist;
wobei der Ventilkörper (4) mindestens zwei Anschlussstutzen (8, 9) umfasst, die zum Anschluss an jeweilige Leitungen (2, 3) des Hydrauliksystems konfiguriert sind,
wobei der Ventilkörper (4) mindestens eine Druckansaugöffnung (15, 16) aufweist, die stromaufwärts der Kugel (5) angeordnet ist, und mindestens eine Auslassöffnung (17) aufweist, die fluidisch mit dem Sitz (13) verbunden ist, wobei der Sitz (13) sowohl in einer Öffnungsposition als auch in einer Schließposition der Kugel (5) fluidisch mit dem Stützen (9) stromabwärts der Kugel verbunden ist,
und wobei mindestens ein Teil der Auslassöffnung (17) stromaufwärts der Rotationsachse (A1) der Kugel (5) angeordnet ist, **dadurch gekennzeichnet, dass** die Achse (A3) der Auslassöffnung (17) stromaufwärts der Rotationsachse (A1) der Kugel (5) angeordnet ist.

2. Ventil (1) gemäß Anspruch 1, wobei die Auslassöffnung (17) direkt mit dem Sitz (13) verbunden ist.

3. Ventil (1) nach Anspruch 1 oder 2, wobei die Auslassöffnung (17) vollständig stromaufwärts der Rotationsachse (A1) der Kugel angeordnet ist.

4. Ventil (13) nach Anspruch 1, 2 oder 3, wobei in einer Schließstellung der Kugel (5) eine oder mehrere Dichtungen (14) die fluidische Verbindung zwischen der Auslassöffnung (17) und dem vor der Kugel (5) angeordneten Anschlussstutzen (8), und vorzugsweise zwischen den Drucköffnungen (15, 16) und dem stromabwärts der Kugel angeordneten Anschlussstutzen (9), verhindern.

5. Ventil (1) nach einem der vorhergehenden Ansprüche, wobei zumindest ein Teil des Fluiddurchgangs (6), der zumindest teilweise die Rückschlagventilanordnung (7) enthält, einen Innendurchmesser aufweist, der größer ist als der Innendurchmesser der Leitungen (2, 3) des Hydrauliksystems, an die die zumindest zwei Anschlüsse (8, 9) zum direkten Anschluss konfiguriert sind.

6. Ventil (1) gemäß einem der vorhergehenden Ansprüche, wobei die Auslassöffnung (17) eine Achse (A3) aufweist, die parallel zur Rotationsachse der Kugel (5) verläuft.

7. Ventil nach Anspruch 6, wobei die Kugel (5) einen Bedienknopf (11) aufweist und die Auslassöffnung (17) in Bezug auf den Ventilkörper dem Bedienknopf (11) gegenüberliegend angeordnet ist.

8. Ventil (1) nach einem der vorhergehenden Ansprüche, wobei die Achse (A2) der Druckansaugöffnung orthogonal zur Achse (A3) der Auslassöffnung (17) angeordnet ist.

9. Ventil (1) nach einem der vorhergehenden Ansprüche, aufweisend eine zweite Druckansaugöffnung (16), wobei vorzugsweise die zweite Druckansaugöffnung (16) der ersten Druckansaugöffnung (15) gegenüberliegend angeordnet ist.

10. Ventil (1) gemäß einem der vorhergehenden Ansprüche, wobei die Kugel (5) eine Öffnung (21) aufweist, die fluidisch mit dem Fluiddurchgang (6) verbunden ist, um den Fluiddurchgang (6) mit der Außenfläche der Kugel (5) zu verbinden.

## Revendications

1. Soupape à bille (1) pour insertion directe dans des conduits (2, 3) d'un système hydraulique, comprenant un corps de soupape (4) ayant un siège (13) dans lequel sont logés :
• une bille (5) rotative autour d'un axe de rotation (A1), alternativement entre une position d'ouverture et une position de fermeture du corps de soupape (4), et creuse de manière à définir un passage fluidique (6) ;
• un ensemble de soupape anti-retour (7) inséré dans au moins une partie dudit passage fluidique (6) de ladite bille (5) ;
ledit corps de soupape (4) comprend au moins deux raccords de connexion (8, 9) configurés pour être connectés à des conduits respectifs (2, 3) dudit système hydraulique,
dans laquelle ledit corps de soupape (4) comprend au moins un trou d'admission de pression (15, 16) disposé en amont de la bille (5), et au moins un trou de décharge (17) relié fluidiquement audit siège (13),
dans laquelle ledit siège (13) est relié fluidiquement au raccord (9) en aval de ladite bille, à la fois dans une position d'ouverture et dans une position de fermeture de ladite bille (5),
et dans laquelle au moins une partie du trou de décharge (17) est disposée en amont de l'axe de rotation (A1) de ladite bille (5), **caractérisée en ce que** l'axe (A3) du trou de décharge (17) est disposé en amont de l'axe de rotation (A1) de la bille (5).

2. Soupape (1) selon la revendication 1, dans laquelle ledit trou de décharge (17) est directement relié au siège (13).

3. Soupape (1) selon la revendication 1 ou 2, dans laquelle le trou de décharge (17) est entièrement disposé en amont de l'axe de rotation (A1) de ladite bille.

4. Soupape (13) selon la revendication 1, 2 ou 3, dans laquelle, dans une position de fermeture de la bille (5), un ou plusieurs joints (14) empêchent la connexion fluidique entre le trou de décharge (17) et le raccord de connexion (8) disposé en amont de la bille (5), et de préférence entre les trous de pression (15, 16) et le raccord de connexion (9) disposé en aval de la bille.

5. Soupape (1) selon l'une des revendications précédentes, dans laquelle au moins une partie dudit passage fluidique (6) contenant au moins partiellement ledit ensemble de soupape anti-retour (7) a un diamètre intérieur de dimensions supérieures au diamètre intérieur desdits conduits (2, 3) dudit système hydraulique, auxquels lesdits au moins deux raccords (8, 9) sont configurés pour être directement connectés.

6. Soupape (1) selon l'une des revendications précédentes, dans laquelle le trou de décharge (17) a un axe (A3) parallèle à l'axe de rotation de ladite bille (5).

7. Soupape selon la revendication 6, dans laquelle ladite bille (5) a un bouton de commande (11), et ledit trou de décharge (17) est disposé à l'opposé du bouton de commande (11), par rapport audit corps de soupape.

8. Soupape (1) selon l'une des revendications précédentes, dans laquelle l'axe (A2) dudit trou d'admission de pression est disposé orthogonalement à l'axe (A3) dudit trou de décharge (17).

9. Soupape (1) selon l'une des revendications précédentes, comprenant un deuxième trou d'admission de pression (16), dans laquelle, de préférence, ledit deuxième trou d'admission de pression (16) est disposé à l'opposé du premier trou d'admission de pression (15).

10. Soupape (1) selon l'une des revendications précédentes, dans laquelle ladite bille (5) a une ouverture (21) reliée fluidiquement au passage fluidique (6), de manière à relier le passage fluidique (6) à la surface extérieure de la bille (5).
